# EUROPEAN PATENT SPECIFICATION

(11) **EP 1 778 704 B1**
(45) Date of publication and mention of the grant of the patent: **26.11.2008**
(21) Application number: 05756224.1
(22) Date of filing: 06.06.2005
(51) Int. Cl.: C07F 9/50

(54) **PROCESS FOR THE PREPARATION OF ASYMMETRICALLY SUBSTITUTED BIARYLDIPHOSPHINES**
VERFAHREN ZUR HERSTELLUNG VON ASYMMETRISCH SUBSTITUIERTEN BIARYLDIPHOSPHINEN
PROCÉDÉ DE PRÉPARATION DE BIARYLDIPHOSPHINES ASYMÉTRIQUEMENT SUBSTITUÉES

(30) Priority: 25.06.2004 EP 04014908
(43) Date of publication of application: 02.05.2007
(73) Proprietor: Lonza AG, 4052 Basel (CH)
(72) Inventor: METTLER, Hanspeter, CH-3930 Visp (CH); LEROUX, Frédéric, F-67850 Herrlisheim (FR); SCHLOSSER, Manfred, CH-1018 Lausanne (CH)
(86) International application number: PCT/EP2005/006065
(87) International publication number: WO 2006/002731

(56) References cited:
- EP-A- 0 647 648
- WO-A-02/40492
- MURATA M ET AL: "SYNTHESIS OF ATROPISOMERIC BIPHENYLBISOPHOSPINE, 6,2'-BIS (TRIFLUOROMETHYL)-1,1'-BIPHENYL (FUPMOP) AND ITS USE IN RUTHENIUM(II)-CATALYZED ASYMMETRIC HYDROGENATION OF A 3-OXO ESTER" SYNLETT, THIEME VERLAG, STUTTGART, DE, no. 11, 1 November 1991 (1991-11-01), pages 827-829, XP000604849 ISSN: 0936-5214
- MARCO CEREGHETTI ET AL: "(R)- and (S)-6,6'-Dimethyl- and 6,6'-Dimethoxy-2,2'-diiodo-1,1'-biphenyls: Versatile Intermediates for the Synthesis of Atropisomeric Diphosphine Ligands" TETRAHEDRON LETTERS, vol. 37, no. 30, 1996, pages 5347-5350, XP002311142

## Description

Preparation of enantiomerically pure compounds is important to improve the effect of pharmaceutically active compounds and to restrict unwanted side effects of the "wrong" isomers. The invention relates to a process for the preparation of asymmetrically substituted biaryldiphosphine ligands and transition metal complexes thereof for the hydrogenation of unsaturated prochiral compounds using said complexes.

Asymmetric catalytic hydrogenation is one of the most efficient and convenient methods for preparing a wide range of enantiomerically pure compounds. Providing methods for the precise control of molecular chirality of pharmaceutical active compounds and compounds thereof tends to play an increasingly important role in synthetic chemistry. Several diphosphine ligand families are commonly known with their trade names, for example BINAP, CHTRAPHOS, DIOP, DUPHOS, SEGPHOS and TUNAPHOS.

Methods for the preparation of biaryldiphosphine ligands of the BINAP, SEGPHOS and TUNAPHOS families are disclosed in EP-A-0256634; EP-A-850945 and WO-A-01/21625, respectively. Furthermore WO-A-03/029259 discloses a synthesis of a fluorine derivative of SEGPHOS and its use.

In Pai, C.-C. et al., Tetrahedron Lett. 2002, 43, 2789-2792 the use of methylenedioxo and ethylenedioxo substituted biaryldiphosphine ligands for the asymmetric hydrogenation of ethyl 4-chloro-3-oxobutyrate is described. Further examples for the preparation ofbiaryldiphosphines and asymmetric hydrogenation reactions using catalysts derived from biaryldiphosphine ligands are disclosed in EP-A-0 926 152, EP-A-0 945 457 and EP-A-0 955 303. Usually both symmetrically and unsymmetrically substituted biaryldiphosphines are claimed, though only examples of symmetrically substituted ligands are disclosed. With only few specific exceptions, no general applicable synthetic route to unsymmetrically substituted biaryldiphosphines and catalysts derived therefrom is disclosed.

Biaryl diphosphine ligands consist of three different moieties, a rigid biaryl core, substituents to hinder biaryl rotation and usually two phosphine groups with voluminous substituents to complex a transition metal. Known examples of ligand systems have symmetric substitution patterns of the core and identical phosphine groups. As a rare example WO-A-02/40492 discloses asymmetric hydrogenation of ethyl 4-chloro-3-oxobutyrate, using a catalyst containing the ligand (*S*)-6-methoxy 5',6'-benzo-2,2'-bis(diphenylphosphino)-biphenyl. The (*S*)-alcohol is obtained with an enantiomeric excess (ee) of 83%.

EP-A-0 647648 and WO-A-02/40492 claim diphosphines with asymmetrically substituted biaryl core, but the disclosed synthetic principles are not suitable to produce a broad variety of different asymmetrically substituted biaryldiphosphine ligands.

For the synthesis of the inventive asymmetric biaryldiphosphines a major obstacle had to be overcome as depicted in Scheme 1. Any 2'-diphenylphosphino-2-lithiobiphenyl generated as an intermediate failed to yield an asymmetrically substituted biaryldiphosphine by condensation with a second chlorodiorganylphosphine component, if a single fluorine, chlorine or bromine atom or a single methoxy or dimethylamino group was attached to the 6-position (Desponds, O., Schlosser, M., J. Organomet. Chem. 1996, 507, 257). The compounds undergo nucleophilic substitution at the phosphorus atom and cyclization to afford 1*H*-benzo[b]phosphindole (9-phosphafluorene). Known unsuccessful approaches to the inventive ligands are depicted in Scheme 1 below.

Here and hereinbelow the term "enantiomerically pure compound" comprises optically active compounds with an enantiomeric excess (ee) of at least 90 %.

Here and hereinbelow the term "C₁₋ₙ-alkyl" represents a linear or branched alkyl group having 1 to n carbon atoms. C₁₋₆-alkyl represents for example methyl, ethyl, propyl, isopropyl, butyl, isobutyl, *sec-*butyl, *tert*-butyl, pentyl and hexyl.

Here and hereinbelow the term "C₁₋ₙ-alkoxy" represents a linear or branched alkoxy group having 1 to n carbon atoms. C₁₋₆-alkoxy represents for example methoxy, ethoxy, propoxy, isopropoxy, butoxy, isobutoxy, *sec*-butoxy, *tert*-butoxy, pentyloxy and hexyloxy.

### Scheme 1: Unsuccessful approaches to asymmetrically substituted diphosphine ligands.

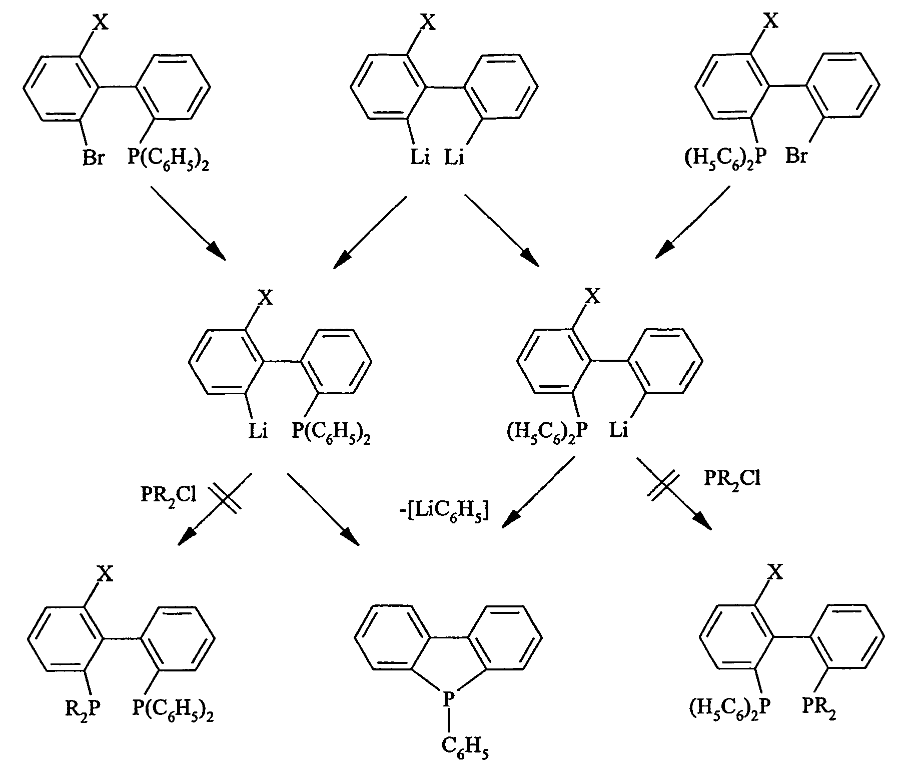

with X = H, F, Cl, Br, OCH₃, N(CH₃)₂

Here and hereinbelow the term "C₃₋ₙ-cycloalkyl" represents a cycloaliphatic group having 3 to n carbon atoms. C₅₋₁₀-cycloalkyl represents mono- and polycyclic ring systems such as cyclopentyl, cyclohexyl, cycloheptyl, cyclooctyl, adamantyl or norbornyl.

Here and hereinbelow the term "C₃₋ₙ-cycloalkoxy" represents a cycloalkoxy group having 3 to n carbon atoms. C₅₋₁₀-cycloalkyl represents for example cyclopentyloxy, cyclohexyloxy, cycloheptyloxy, cyclooctyloxy or cyclodecyloxy.

Here and hereinbelow the term "di-C₁₋₆-alkylamino" represents a dialkylamino group comprising two alkyl moieties independently having 1 to 6 carbon atoms. Di-C₁₋₆-alkyl amino represents for example *N,N*-dimethylamino, *N,N*-diethylamino, *N*-ethyl-*N*-methylamino, *N*-methyl-*N*-propylamino, *N*-ethyl-*N*-hexylamino or *N,N*-dihexylamino.

Here and hereinbelow the term "aryl" represents an aromatic group, preferably phenyl or naphthyl optionally being further substituted with one or more halogen atoms, nitro and/or amino groups, and/or optionally substituted C₁₋₆-alkyl, C₁₋₆-alkoxy or di-C₁₋₆-alkylamino groups.

Here and hereinbelow the term "C₁₋₃-alcohols" represents methanol, ethanol, propanol and isopropanol.

Here and hereinbelow the term "C₁₋₃-alkanoic acids" represents formic acid, acetic acid and propanoic acid.

Considering the high stereocontrol and efficient action of enzymes, i.e. natural catalysts, great effort is spent to improve selectivity and efficiency of artificial catalysts, particularly for the production of pharmaceutically interesting compounds.

The technical problem to be solved by the present invention was to provide a method for the tailored synthesis of a series of biaryldiphosphines. A further problem to be solved was to establish said process in a robust manner to provide suitable amounts of ligands for the pharmaceutical industry. Furthermore, the general concept should start with an easily available compound and should contain few reaction steps, allowing the synthesis of a wide variety of ligands, only depending on the reaction sequence.

The problem could be solved according to the process of claim 1.

Provided is a process for the preparation of asymmetrically substituted biaryldiphosphine ligands of the formula, 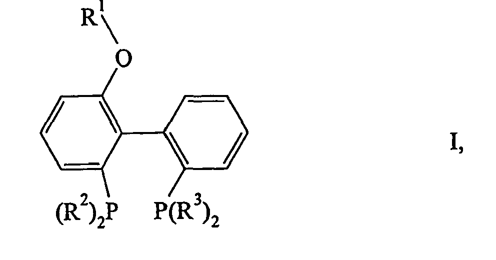 wherein R¹ is C₁₋₆-alkyl or C₃₋₁₀-cycloalkyl optionally substituted with one or more halogen atoms, and
R² and R³ are equal and are C₅₋₁₀-cycloalkyl or C₁₋₆-alkyl,
or
R² is C₁₋₆-alkyl or C₅₋₁₀-cycloalkyl, and R³ is aryl optionally substituted with one or more substituents selected from the group consisting of halogen atoms, nitro, amino, C₁₋₆-alkyl, C₁₋₆-alkoxy and di-C₁₋₆-alkylamino groups, and
each C₁₋₆-alkyl, C₁₋₆-alkoxy, di-C₁₋₆-alkylamino and C₅₋₁₀-cycloalkyl group in R² and R³ optionally being substituted with one or more halogen atoms,
comprising a first reaction sequence, wherein one bromine atom of 2,2',6,6'-tetrabromobiphenyl 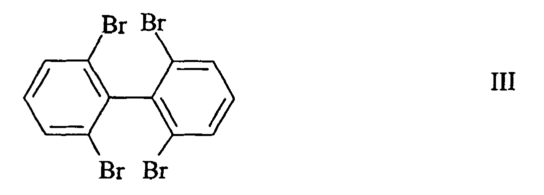 is exchanged with hydrogen by bromine-metal exchange and subsequent metal-hydrogen exchange by reaction with a proton donor, to afford a compound of formula 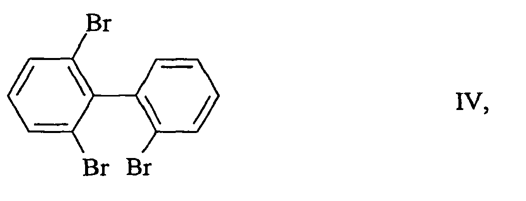 and a second reaction sequence, wherein one bromine atom of the aromatic moiety of the compound of formula IV containing two bromines is exchanged with OR¹ by bromine-metal exchange and subsequent metal-hydroxy exchange, followed by an alkylation, to afford a compound of formula 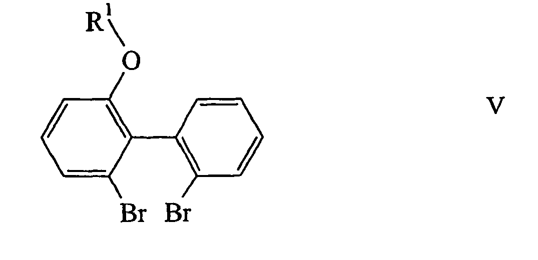 wherein R¹ is as defined above,
and further reaction sequences, wherein each reaction sequence comprises at least one bromine-metal exchange and subsequent metal-phophine exchange with the respective phosphine, thereby exchanging the respective bromine atom with a diarylphosphino, di-C₅₋₁₀-cycloalkylphosphino or di-C₁₋₆-alkylphosphino group.

The bromine-metal exchanges mentioned in the instant invention may be carried out with the required amount of the respective organometallic compound at a temperature below -40 °C ("low temperature bromine-metal exchange") or at a temperature of at last 0 °C ("high temperature bromine-metal exchange").

Chiral biaryldiphosphine ligands comprising a biaryl skeleton which is permanently twisted around the central carbon-carbon bond have two atropisomers. Asymmetric hydrogenation with transition metal complexes are preferably performed with one of the atropisomeres and optionally further chiral auxiliaries. Therefore, it should be appreciated that any reference to ligands of formula 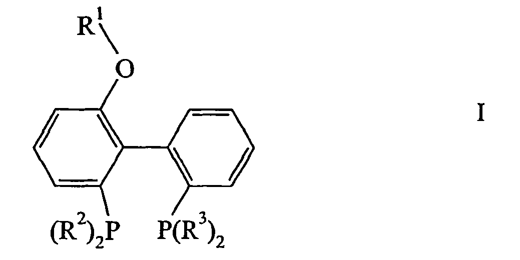 wherein R¹, R² and R³ are as defined above, implicitly includes its atropisomers 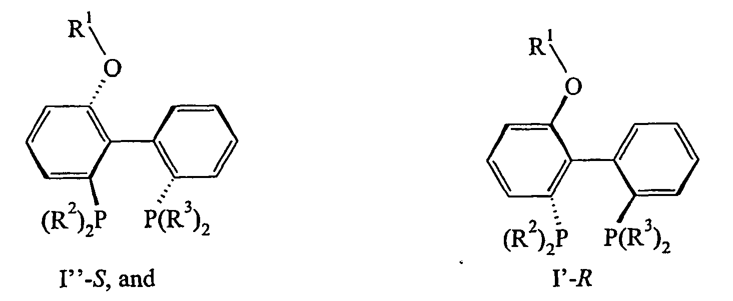 if not otherwise specified, e.g. by indicating their positive (+) or negative (-) optical rotation.

The undesired ring closure mentioned in Scheme 1 above can surprisingly be avoided by the inventive process. The reaction sequences of the present process for the preparation of compounds of formula I are depicted in Scheme 2. The synthetic approach of Scheme 2 starts with 2,2',6,6'-tetrabromo-1,1'-biphenyl (III), wherein one bromine atom of III is replaced by hydrogen. Compound III can be obtained by condensation of 1,3-dibromo-2-iodobenzene (II) according to Rajca A. et al., J. Am. Chem. Soc. 1996,118, 7272-7279. According to Scheme 2 tailoring of ligands of formula I can be achieved by modification of the order, reaction temperature and equivalent amounts of agents of only 5 basic reactions (a to e).

### Scheme 2: Preparation of ligands I from 2,2',6,6'-tetrabromobiphenyl (III) replacing one bromine atom with hydrogen

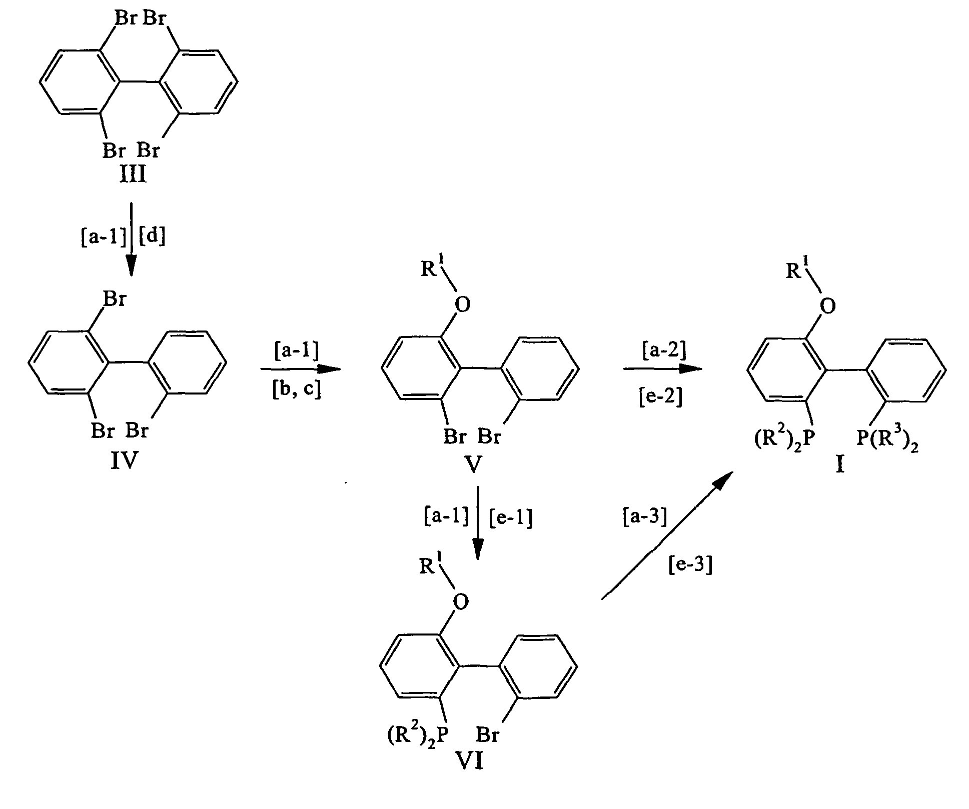

R¹, R² and R³ as described therein,
[a-1] =1 eq. low temperature bromine-metal exchange;
[a-2] = 2 eq. low temperature bromine-metal exchange;
[a-3] =1 to 2 eq. high temperature bromine-metal exchange;
[b] = borane oxidation;
[c] = alkylation;
[d] = hydrogen quenching,
[e-1] =1 eq. metal-alkyl- or cycloalkylphosphine exchange;
[e-2] = 2 eq. metal-alkyl- or cycloalkylphosphine exchange;
[e-3] = 1 eq. metal-arylphosphine exchange;

In a preferred embodiment, the bromine-metal exchange of the compound of formula III is carried out with one equivalent of *n*-butyllithium at a temperature below -40 °C ("1 eq. low temperature bromine-metal exchange") in a polar solvent. The following metal-hydrogen exchange is carried out by reaction with a proton donor, to afford a compound of formula IV.

Preferably the hydrogen donor is selected from the group consisting of C₁₋₃-alcohols, water, non-oxidizing inorganic proton acids, and C₁₋₃-alkanoic acids. Preferably the non-oxidizing inorganic proton acid is HCl.

More preferably, the reaction with the hydrogen donor (hydrogen quenching) is carried out at a temperature in the range of -60 to -90 °C.

In a further preferred embodiment, the bromine-metal exchange of the second reaction sequence of the compound of formula IV is carried out with one equivalent of n-butyllithium at a temperature below -40 °C in a polar solvent to afford a metallated intermediate. The following metal-hydroxy exchange is carried out by reacting the metallated intermediate with a borane or organoborate, followed by reaction with a peroxy compound in the presence of an alkali and/or earth alkali hydroxide, and the alkylation is carried out with an alkylating agent in the presence of a base.

In a preferred embodiment, the borane or organoborate is fluorodimethoxyborane ethyl ether adduct, triisopropylborate or trimethylborate, preferably in ethereal solution.

In another preferred embodiment, the peroxy compound is selected from the group consisting of hydrogen peroxide, peracetic acid, *m*-chloroperbenzoic acid and *tert*-butyl hydroperoxide.

In yet another preferred embodiment, the alkali and/or earth alkali hydroxide in the reation with the peroxy compound is selected from the group consisting of LiOH, NaOH, KOH, Ca(OH)₂ and Mg(OH)₂.

In a further preferred embodiment, the base of the alkylation reaction is an alkali and/or earth alkali hydroxide, selected from the group consisting of LiOH, NaOH, KOH, Ca(OH)₂ and Mg(OH)₂.

In a preferred process the alkylating agent is a C₁₋₆-alkyl halide, a C₅₋₁₀-cycloalkyl halide or dimethyl sulfate. Preferably the C₁₋₆-alkyl halide is a C₁₋₆-alkyl bromide or C₁₋₆-alkyl iodide. Particularly preferred the alkylating agent is iodomethane or dimethyl sulfate.

In a preferred process, wherein a further reaction sequence is carried out starting with the compound of formula V above, comprising a low temperature bromine-metal exchange of the remaining bromine atoms and subsequent metal-phosphine exchange, to afford a compound of formula 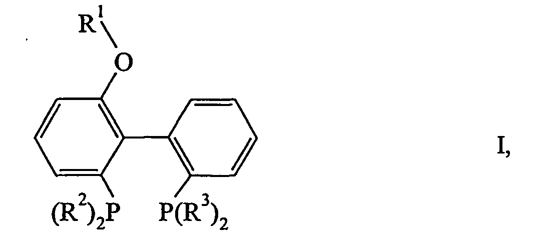 wherein R¹ is C₁₋₆-alkyl or C₃₋₁₀-cycloalkyl optionally substituted with one or more halogen atoms, and
R² and R³ are equal and are C₅₋₁₀-cycloalkyl or C₁₋₆-alkyl,
or
R² is C₅₋₁₀-cycloalkyl or C₁₋₆-alkyl, and R³ is aryl optionally substituted with one or more substituents selected from the group consisting of halogen atoms, nitro, amino, C₁₋₆-alkyl,
C₁₋₆-alkoxy and di-C₁₋₆-alkylamino groups,
and each C₁₋₆-alkyl, C₁₋₆-alkoxy, di-C₁₋₆-alkylamino and C₅₋₁₀-cycloalkyl group in R² and R³ optionally being substituted with one or more halogen atoms.

Provided is also a process, wherein a further reaction sequence is carried out starting from compounds of formula V above, comprising a low temperature bromine-metal exchange of one bromine atom of the aryl moiety containing the OR¹ substituent and metal-phosphine exchange, to afford a compound of formula 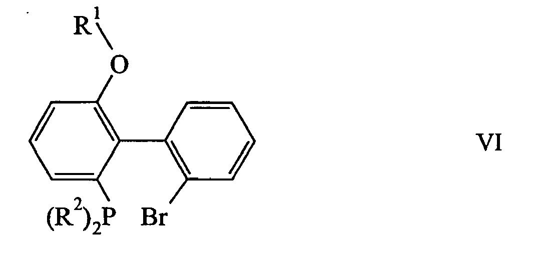 wherein R¹ is as defined above and wherein R² is C₅₋₁₀-cydoalkyl or C₁₋₆-alkyl, the C₅₋₁₀-cycloalkyl or C₁₋₆-alkyl groups in R² optionally being substituted with one or more halogen atoms.

Preferably the compound of formula VI is than reacted in a high temperature bromine-metal exchange and a subsequent metal-phosphine exchange, to afford ligands of formula 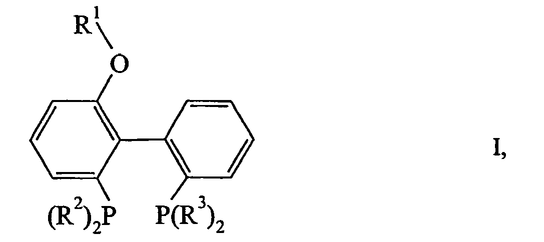 wherein R¹ and R² are as defined above, and R³ is aryl optionally substituted with one or more substituents selected from the group consisting of halogen atoms, nitro, amino, C₁₋₆-alkyl, C₁₋₆-alkoxy and di-C₁₋₆-alkylamino groups, and each C₁₋₆-alkyl, C₁₋₆-alkoxy and di-C₁₋₆-alkylamino in R³ optionally being substituted with one or more halogen atoms.

In a preferred embodiment, each low temperature bromine-metal exchange is carried out with an organometallic compound such as n-butyllithium, isopropylmagnesium chloride or lithium tributylmagnesate at a temperature below -40 °C, preferably in the range of -60 to -90 °C.
In a preferred embodiment each low temperature bromine-metal exchange is carried out in a polar solvent, preferably containing tetrahydrofuran.

The removal of the last remaining bromine atom from compounds of formula VI, as depicted in Scheme 2, requires different reaction conditions for the halogen-metal exchange. In this reaction sequence, in a preferred embodiment, the halogen-metal exchange is carried out with an organometallic compound such as *n*-butyllithium, *tert-*butyllithium, isopropylmagnesium chloride or lithium tributylmagnesate, at a temperature of at least 0 °C, preferably in the range of 0 to +40 °C. The amount of the organometallic compound (1 to 2 equivalents) depends on the substituents attached to the biaryl moiety. In most cases one equivalent of the organometallic compound is sufficient to replace the halogen atom with the metal.
In a preferred embodiment the high temperature bromine-metal exchange is carried out in a solution containing toluene and/or tetrahydrofuran.

In a preferred embodiment the metal-phosphine exchange is carried out using a halophosphine of the formula 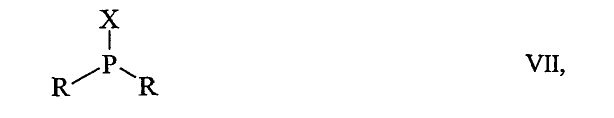 wherein X is chlorine, bromine or iodine and R are equal and are R² or R³, wherein R² and R³ are as definded above.

Depending on the intended substituents, the halophosphine of the formula VII is selected from the group consisting of halodiarylphosphines, halodi-(C₅₋₁₀-cycloalkyl)phosphines and halodi-(C₁₋₆-alkyl)phosphines.

Each aryl moiety of the halodiarylphosphine moiety is optionally substituted with one or more substituents selected from the group consisting of halogen atoms, nitro, amino, C₁₋₆-alkyl, C₁₋₆-alkoxy and di-C₁₋₆-alkylamino groups. Optionally each C₁₋₆-alkyl, C₁₋₆-alkoxy, di-C₁₋₆-alkylamino and C₅₋₁₀-cycloalkyl group of the halophosphine of the formula VII is substituted with one or more halogen atoms. In a preferred embodiment the halophosphine of the formula VII is selected from the group consisting of halodiarylphosphines and halodi-(C₅₋₁₀-cycloalkyl)phosphines, more preferably is chlorodicyclohexylphosphine, bromodicyclohexylphosphine, chlorodiphenylphosphine or bromodiphenylphosphine.

Provided are compounds of of formula 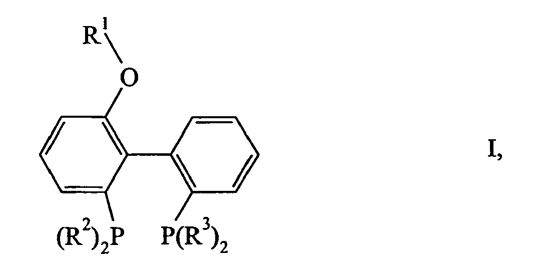 wherein R¹ is C₁₋₆-alkyl or C₃₋₁₀-cycloalkyl optionally substituted with one or more halogen atoms, and
R² and R³ are equal and are C₅₋₁₀-cycloalkyl or C₁₋₆-alkyl,
or
R² is C₅₋₁₀-cycloalkyl or C₁₋₆-alkyl, and R³ is aryl optionally substituted with one or more substituents selected from the group consisting of halogen atoms, nitro, amino, C₁₋₆-alkyl, C₁₋₆-alkoxy and di-C₁₋₆-alkylamino groups,
and each C₁₋₆-alkyl, C₁₋₆-alkoxy, di-C₁₋₆-alkylamino and C₅₋₁₀-cycloalkyl group in R² and R³ optionally being substituted with one or more halogen atoms.

Furthermore provided are compounds of formula 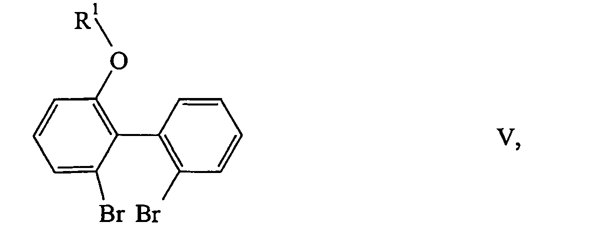 wherein R¹ is C₁₋₆-alkyl or C₃₋₁₀-cycloalkyl optionally further substituted with one or more halogen atoms.

The invention provides compounds of formula 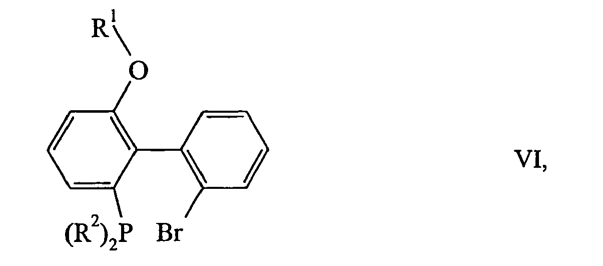 wherein R¹ is C₁₋₆-alkyl or C₃₋₁₀-cycloalkyl optionally substituted with one or more halogen atoms, and
R² is C₅₋₁₀-cycloalkyl or C₁₋₆-alkyl, the C₅₋₁₀-cycloalkyl or C₁₋₆-alkyl group in R² optionally being substituted with one or more halogen atoms.

Provided is the use of compounds of formula 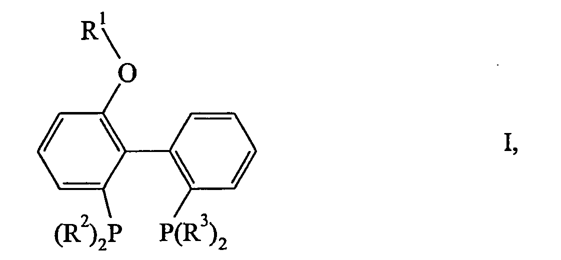 wherein R¹ is C₁₋₆-alkyl or C₃₋₁₀-cycloalkyl optionally substituted with one or more halogen atoms, and
R² and R³ are equal and are C₅₋₁₀-cycloalkyl or C₁₋₆-alkyl,
or
R² is C₅₋₁₀-cycloalkyl or C₁₋₆-alkyl, and R³ is aryl optionally substituted with one or more substituents selected from the group consisting of halogen atoms, nitro, amino, C₁₋₆-alkyl, C₁₋₆-alkoxy and di-C₁₋₆-alkylamino groups,
and each C₁₋₆-alkyl, C₁₋₆-alkoxy, di-C₁₋₆-alkylamino and C₅₋₁₀-cycloalkyl group in R² and R³ optionally being substituted with one or more halogen atoms, for the preparation of catalytic active complexes of transition metals, preferably of ruthenium, rhodium or iridium. Said catalytic active complexes of transition metals can be used for hydrogenating, preferably asymmetrically hydrogenating, of a compound containing at least one unsaturated prochiral system. Preferably the products obtained by said asymmetrically hydrogenating are enantiomerically pure compounds.

Several examples for general applicable methods for the preparations of catalysts and catalyst solutions are disclosed in Ashworth, T. V. et al. S. Afr. J. Chem. 1987, 40,183-188, WO 00/29370 and Mashima, K. J. Org. Chem. 1994, 59, 3064-3076.

In a preferred embodiment the hydrogen pressure during hydrogenating is in the range of 1 to 60 bar, particularly preferred in the range of 2 to 35 bar.
In a further preferred embodiment hydrogenating is carried out at a temperature in the range of 0 to 150 °C.

In a preferred embodiment, the compounds containing at least one unsaturated prochiral system are selected from the group consisting of compounds containing a prochiral carbonyl group, a prochiral alkene group or a prochiral imine group.

In a particular preferred embodiment, the compound containing at least one unsaturated prochiral carbonyl, alkene or imine group is selected from the group consisting of α- and β-ketoesters, α- and β-ketoamines, α- and β-ketoalcohols, acrylic acid derivatives, acylated enamines or N-substituted imines of aromatic ketones and aldehydes.
Preferably the hydrogenation reactions are carried out with a catalyst solution in a polar solvent like C₁₋₄-alcohols, water, dimethyl sulfoxide (DMSO), dimethylformamide (DMF), acetonitrile (MeCN), ethers or mixtures thereof. Preferably the polar solvent contains methanol, ethanol or isopropyl alcohol or a mixture thereof. Particularly preferred, the solution may contain further additives.

The present invention is illustrated by the following non-limiting examples.

### Examples:

### Reference Example 1:1,3-Dibromo-2-iodobenzene (II)

Diisopropylamine (0.14 L, 0.10 kg, 1.0 mol) and 1,3-dibromobenzene (0.12 L, 0.24 kg, 1.0 mol) were consecutively added to a solution of *n*-butyllithium (1.0 mol) in tetrahydro furan (2.0 L) and hexanes (0.64 L) at -75 °C. After 2 h at -75 °C, a solution of iodine (0.26 kg, 1.0 mol) in tetrahydrofuran (0.5 L) was added. The solvents were evaporated and the residue dissolved in diethyl ether (1.0 L). After washing with a 10% aqueous solution of sodium thiosulfate (2×0.1 L), the organic layer was dried over sodium sulfate before being evaporated to dryness. Upon crystallization from ethanol (1.0 L), colorless platelets 0.33 kg (91%) were obtained; m.p. 99 to 100 °C;
¹H-NMR (CHCl₃, 400 MHz): δ = 7.55 (d, *J*= 8.1 Hz, 2 H), 7.07 (t, J = 8.1 Hz, 2 H); C₆H₃Br₂I (361.80): calculated (%) C 19.92, H 0.84; found C 19.97, H 0.80.

### Reference Example 2: 2,2',6,6'-Tetrabromo-1,1'-biphenyl (III)

At-75 °C butyllithium (14 mmol) in hexanes (5.6 mL) was added to a solution of 1,3-dibromo-2-iodobenzene (4.3 g,12 mmol) in diethyl ether (0.18 L). After the solution was stirred for 2 h at -75 °C, copper(II)chloride (9.7 g, 72 mmol) was added, and the reaction mixture was allowed to attain 25 °C over a 12 h period. Cold water was added to the reaction mixture and the organic layer was separated. The aqueous phase was extracted with ethyl acetate (2×0.10 L). The combined organic layers were dried over sodium sulfate before being evaporated. 2,2',6,6'-tetrabromo-1,1'-biphenyl precipitates upon treatment of the residue with hexanes cooled to -20 °C. The product (9.0 g, 33%) is pure enough for further reaction;
m.p. 214 - 215 °C;
¹H NMR (CDCl₃, 400 MHz): δ = 7.67 (d, *J=* 8.3 Hz, 4 H), 7.17 (t, *J*= 8.0 Hz, 2 H).

### Reference Example 3: 2,2',6-Tribromo-1,1'-biphenyl (IV)

At -75 °C, butyllithium (0.10 mol) in hexanes (52 mL) was added to a solution of 2,2',6,6'-tetrabromo-1,1'-biphenyl (47 g, 0.10 mol) in tetrahydrofuran (0.50 L). Immediately after the addition was completed, methanol (10 mL) was added and, after addition of water (0.20 L), the organic phase was separated and the aqueous layer was extracted with diethyl ether (2×0.10 L). The combined organic layers were dried over sodium sulfate before being evaporated. Crystallization from ethanol (0.50 L) afforded 35 g (91%) 2,2',6-tribromo-1,1'-biphenyl as colorless needles; m.p. 95 to 97 °C;
¹H-NMR (CDCl₃, 400 MHz): δ = 7.69 (d, *J*= 8.1 Hz, I H), 7.64 (dd, *J*= 8.1, 0.7 Hz, 2 H), 7.42 (tt, *J*= 7.5, 0.9 Hz, 1 H), 7.29 (ddt, *J=* 7.8, 1.8, 0.7 Hz, 1 H), 7.18 (dd, *J=* 7.6, 1.6 Hz, 1 H), 7.12 (dd, *J*= 8.1, 0.7 Hz,1 H);
Cl₂H₇Br₃ (390.90): calculated (%) C 36.87, H 1.81; found C 36.82, H 1.66.

### Reference Example 4: 2',6-Dibromo-2-methoxy-1,1'-biphenyl (Va; R¹ = Me)

At -75 °C, butyllithium (0.10 mol) in hexanes (63 mL) was added to a solution of compound IV (39 g, 0.10 mol) in tetrahydrofuran (0.50 L). The mixture was consecutively treated with fluorodimethoxyborane diethyl ether adduct (19 mL,16 g, 0.10 mol), a 3.0 M aqueous solution of sodium hydroxide (36 mL) and 30% aqueous hydrogen peroxide (10 mL, 3.6 g, 0.10 mol). The reaction mixture was neutralized with 2.0 M hydrochloric acid (0.10 L) and extracted with diethyl ether (3×0.10 L). The combined organic layers were washed with a 10% aqueous solution of sodium sulfite (0.10 L), dried over sodium sulfate and evaporated. The oily residue was dissolved in dimethyl sulfoxide (0.20 L), before iodomethane (7.5 mL, 17 g, 0.12 mol) and potassium hydroxide powder (6.7 g, 0.12 mol) were consecutively added. After 1 h water (0.50 L) was added and the product was extracted with diethyl ether (3×0.10 L). The organic layers were dried over sodium sulfate and evaporated. Crystallization form ethanol (0.10 L) afforded 25 g (72%) as colorless cubes; m.p. 93 to 95 °C;
¹H-NMR (CDCl₃, 400 MHz): δ = 7.67 (d, *J*= 8.0 Hz, 1 H), 7.38 (t, *J=* 7.5 Hz, 1H), 7.3 (m, 4 H), 6.92 (d, *J*= 8.1 Hz, 1 H), 3.73 (s, 3 H);
C₁₃H₁₀Br₂O (342.03): calculated (%) C 45.32, H 2.95; found C 45.32, H 2.85.

### Example 1: 2',6-Bis(dicyclohexylphosphino)-2-methoxy-1,1'-biphenyl (Ib; R¹ = Me, R² = R³ = cyclohexyl)

At -75 °C, *n*-butyllithium (0.10 mol) in hexanes (63 mL) was added to a solution of compound Va (17 g, 50 mmol) in tetrahydrofuran (0.25 L). After the addition was completed, the mixture was treated with a 2.0 M solution of chlorodicyclohexylphosphine (22 mL, 24 g, 0.10 mol) in tetrahydrofuran (50 mL). The mixture was allowed to reach 25 °C and treated with a saturated aqueous solution of ammonium chloride (0.10 L). The mixture was extracted with ethyl acetate (3×50 mL), and the combined organic layers were dried over sodium sulfate. The diphosphine (43 g, 74%)) was obtained after evaporation of the solvents and crystallization form methanol (0.10 L) as colorless cubes;
m.p. 220 to 221 °C (decomposition);
¹H-NMR (CDCl₃, 400 MHz): δ = 7.56 (m sym., 1H), 7.4 (m, 3 H), 7.16 (d, *J=* 7.5 Hz, 1H), 7.08 (m sym., 1 H), 6.88 (d, *J*= 7.8 Hz, 1H), 3.66 (s, 3 H), 1.7 (m, 24 H),1.2 (m, 20 H);
³¹P-NMR (CDCl₃, 162 MHz): δ =-9.9 (d, *J*=12.1 Hz), -11.5 (d, *J*= 12.2 Hz); C₃₇H₅₄OP₂ (576.79): calculated (%) C 77.05, H 9.44; found C 77.17, H 9.14.

### Reference Example 5: (2'-Bromo-6-methoxy-1,1-biphenyl-2-yl)dicyclohexylphosphine (VIa; R¹= Me and R² = cyclohexyl)

At -75 °C, *n*-butyllithium (0.10 mol) in hexanes (63 mL) was added to a solution of compound Va (34 g, 0.10 mol) in tetrahydrofuran (0.50 L). After the addition was completed, the mixture was treated with a 2.0 M solution of chlorodicyclohexylphosphine (22 mL, 24 g, 0.10 mol) in tetrahydrofuran (0.10 L). The mixture was allowed to reach 25 °C and treated with a saturated aqueous solution of ammonium chloride (0.20 L). The mixture was extracted with ethyl acetate (3×0.10 L), and the combined organic layers were dried over sodium sulfate. Evaporation of the solvents and crystallization form a 9 : 1 mixture (v/v) hexanes / ethyl acetate (50 mL) afforded 36 g (79%) colorless needles;
m.p. 100 to 102 °C;
¹H NMR (CDCl₃, 400 MHz): δ = 7.61 (d, *J*= 7.8 Hz, 1H), 7.38 (t, *J*= 7.9 Hz, 1H), 7.33 (t, *J*= 7.3 Hz, 1H), 7.21 (dt, *J*= 7.9, 1.5 Hz, 2 H), 7.14 (dd, *J=* 7.6, 1.8 Hz, 1H), 6.96 (d, *J*= 8.2 Hz, 1H), 3.72 (s, 3 H), 1.7 (m,12 H), 1.2 (m, 10 H);
³¹P-NMR (CDCl₃, 162 MHz): δ = -13.8 (s);
C₂₅H₃₂BrOP (459.41): calcd. (%) C 65.36, H 7.02; found C 65.52, H 7.07.

### Example 2: 6-Dicyclohexylphosphanyl-2'-diphenylphosphanyl-2-methoxy-1,1'-biphenyl (Ic; R¹ = Me, R² = cyclohexyl and R³ = phenyl)

At 0 °C, *n*-butyllithium (25 mmol) in hexanes (30 mL) was added to a solution of compound VIa (11 g, 25 mmol) in toluene (0.1 L). After 45 min the mixture was cooled to -75 °C and a 1.0 M solution of chlorodiphenylphosphine (4.4 mL, 5.5 g, 25 mmol) in toluene (25 mL) was added. The mixture was allowed to reach 25 °C. A saturated aqueous solution of ammonium chloride (50 mL) was added and the organic layer was separated. The aqueous phase was extracted with ethyl acetate (3×25 mL) and the combined organic layers were dried over sodium sulfate before being evaporated. Crystallization from methanol (50 mL) gave 7.9 g (56%) diphosphine as colorless cubes;
m.p. 170 to 171 °C;
¹H-NMR (CDCl₃, 400 MHz): δ = 7.3 (m,16 H), 6.78 (d, *J*= 7.9 Hz, 1H), 3.23 (s, 3 H); ³¹P-NMR (CDCl₃, 162 MHz): δ = -11.3 (d, *J* = 10.7 Hz), -14.0 (d, *J*= 10.8 Hz);
C₃₇H₄₂OP₂ (564.69): calculated (%) C 78.70, H 7.50; found C 78.59, H 7.43.

### Example 3: (-)- and (+)-6-Dicyclohexylphosphanyl-2'-diphenylphosphino-2-methoxy 1,1'biphenyl (Ic; R¹ = Me, R² = cyclohexyl and R³ = phenyl)

The racemic diphosphine Ic was separated into its enantiomers by preparative chromatography using a chiral stationary phase. The column used was CHIRALCEL^{®} OD 20 µm, the mobile phase was n-Heptane / EtOH 2000:1. From 360 mg racemic material 142 mg of (+)-6-dicyclohexylphosphanyl-2'-diphenylphosphanyl-2-methoxy-1,1'-biphenyl and 123 mg of (-)-6-dicyclohexylphosphanyl-2'-diphenylphosphanyl-2-methoxy 1,1'-biphenyl were isolated. The enantiomeric purity of both compound was 100% (measured by HPLC on an analytic CHIRALCEL^{®} OD 10 µm column), the optical rotation of the (-)-isomer is α_{D}²⁴ (*c* = 0.5 in CH₂Cl₂) = -1.4.

### Example 4: (-)- and (+)-2',6-Bis(dicyclohexylphosphino)-2-methoxy-1,1'-biphenyl (Ib; R¹= Me, R² = R³ = cyclohexyl)

The separation was performed as described in the example 8. The enantiomeric purity was 99.2% for the (-)-isomer and 96.9% for the (+)-isomer (measured by HPLC on an analytic CHIRALCEL^{®} OD 10 µm column), the optical rotation of the (+)-isomer is α_{D}²⁴ (c = 0.5 in CH₂Cl₂) =16.4.

### Example 5: (R)-Ethyl 3-hydroxybutyrate

In a 15 mL autoclave under argon atmosphere RuCl₃ (1.5 mg, 0.007 mmol), (-)-ligand Ib (4.3 mg, 0.007 mmol) and ethyl acetoacetate (0.15 g,1.1 mmol) is dissolved in degassed ethanol (7 mL). After flushing the autoclave with argon hydrogenation is carried out during 15 h at 50°C and at 4 bar hydrogen pressure. After cooling to room temperature the reaction solution is directly analyzed by GC for conversion (column: HP-10125 m /0.2 mm) and, after derivatization with trifluoroacetic acid anhydride, enantiomeric excess (column: Lipodex-E 25 m / 0.25 mm). Conversion is 98.3% at an ee of 86.7%.

### Example 6: (S)-Ethyl 4-chloro-3-hydroxybutyrate

In a 150 mL autoclave under argon atmosphere bis(1-isopropyl-4-methylbenzene)dichlororuthenium (7.5 mg, 0.012 mmol), (+)-ligand Ic (14.4 mg, 0.025 mmol) and ethyl 4-chloro-3-oxobutyrate (0.83 g, 5.0 mmol) is dissolved in degassed ethanol (30 mL). After flushing the autoclave with argon hydrogenation is carried out during 3 h at 80 °C and at 4 bar hydrogen pressure. After cooling to room temperature the reaction solution is directly analyzed by GC for conversion (column: HP-101 25 m / 0.2 mm) and ee (column: Lipodex-E 25 m / 0.25 mm). Conversion is 100% at an ee of 80%.

### Example 7: N-Acetyl-L-phenylalaninc

In a 15 mL autoclave in an argon atmosphere bis(benzene)dichlor-ruthenium (2.6 mg, 0.005 mmol), (-)-ligand Ib (3.2 mg, 0.006 mmol) and 2-(*N*-acetylamino)-cinnamic acid (0.53 g, 2.5 mmol) is dissolved in degassed methanol (5 mL). After flushing the autoclave with argon hydrogenation is carried out during 15 h at 40 °C and at 50 bar hydrogen pressure. After cooling to room temperature the reaction solution is evaporated and the residue analysed by HPLC for conversion (column: Bischoff Kromasil 100 C8) and enantiomeric excess (column: Nucleodex Beta-PM). Conversion is 34% at an ee of 66%.

### Example 8: (S)-2-Acetylamino-3-phenyl-propionic acid methyl ester

In a 15 mL autoclave in an argon atmosphere bis(1,5-cyclooctadiene)-rhodium(I) tetrafluoroborate (1.9 mg, 0.005 mmol), (+)-ligand Ic (2.8 mg, 0.005 mmol) and methyl 2-(*N*-acetylamino)-cinnamate (0.10 g, 0.5 mmol) is dissolved in degassed methanol (6 mL). After flushing the autoclave with argon hydrogenation is carried out during 15 h at 25 °C and at 2 bar hydrogen pressure. After cooling to room temperature the reaction solution is evaporated and the residue analysed by HPLC for conversion (column: Bischoff Kromasil 100 C8) and by GC for enantiomeric excess (column: Lipodex-E 25 m /0.25 mm). Conversion is 100% at an ee of 93.8%.

### Example 9: (S)-N-Benzyl-1-phenylethylamine

In a 15 mL autoclave in an argon atmosphere bis(1,5-cyclooctadiene)-di(iridium(I)dichloride) 98% (6.7 mg, 0.010 mmol), (+)-ligand Ic (5.7 mg, 0.010 mmol), benzylamine (5.6 mg, 0.052 mmol) and *N*-benzyl-*N*-(1-phenylethylidene)amine (0.21 g,1.0 mmol) is dissolved in degassed methanol (5 mL) and stirred for 1h at room temperature. After flushing the autoclave with argon hydrogenation is carried out during 15 h at 30 °C and at 50 bar hydrogen pressure. The reaction solution is directly analysed by GC for conversion (column: HP-101 25 m / 0.2 mm) and enantiomeric excess (column: Macherey-Nagel, Nucleodex Beta-PM CC200/4). Conversion is 100% at an ee of 10%.

### Example 10: (R)-Dimethyl methylsuccinate

Bis(1,5-cyclooctadiene)-rhodium(I) tetrafluoroborate (2.1 mg, 0.005 mmol) and ligand (+)-Ic (3.1 mg, 0.005 mmol) are dissolved in 5 mL degassed methanol in a 15 mL autoclave under argon atmosphere. Dimethyl itaconate (97%, 0.15 g, 0.9 mmol) is added via syringe. After flushing the autoclave with argon, hydrogenation is carried out during 15 h at 23 °C and at 2 bar hydrogen pressure. The reaction solution is directly analysed by GC for conversion (column: RP-1 0 25 m / 0.2 mm) and enantiomeric excess (column: Macherey-Nagel, Nucleodex Beta-PM CC200/4). Conversion is 100% at an ee of 30%.

### Example 11: (R)-Dimethyl methylsuccinate

Bis(1,5-cyclooctadiene)-rhodium(I) tetrafluoroborate (2.1 mg, 0.005 mmol) and (-)-ligand Ib (3.2 mg, 0.006 mmol) are dissolved in 5 mL degassed methanol in a 15 mL autoclave under argon atmosphere. Dimethyl itaconate (97%, 0.15 g, 0.9 mmol) is added via syringe. After flushing the autoclave with argon, hydrogenation is carried out during 15 h at 23 °C and at 2 bar hydrogen pressure. The reaction solution is directly analysed by GC for conversion (column: HP-101 25 m / 0.2 mm) and enantiomeric excess (column: Macherey-Nagel, Nucleodex Beta-PM CC200/4). Conversion is 60% at an ee of 24%.

## Claims

1. A process for the preparation of asymmetrically substituted biaryldiphosphine ligands of the formula, 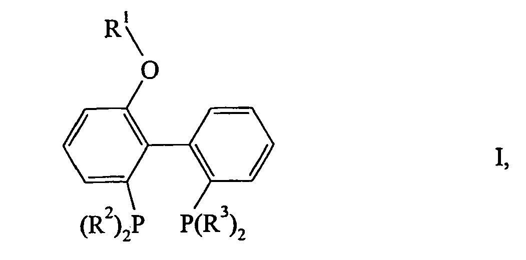 wherein R¹ is C₁₋₆-alkyl or C₃₋₁₀-cycloalkyl optionally substituted with one or more halogen atoms, and
R² and R³ are equal and are C₅₋₁₀-cycloalk-yl or C₁₋₆-alkyl,
or
R² is C₁₋₆-alkyl or C₅₋₁₀-cycloalkyl, and R³ is aryl optionally substituted with one or more substituents selected from the group consisting of halogen atoms, nitro, amino, C₁₋₆-alkyl, C₁₋₆-alkoxy and di-C₁₋₆-alkylamino groups, and
each C₁₋₆-alkyl, C₁₋₆-alkoxy, di-C₁₋₆-alkylamino and C₅₋₁₀-cycloalkyl group in R² and R³ optionally being substituted with one or more halogen atoms,
comprising a first reaction sequence, wherein one bromine atom from 2,2',6,6'-tetrabromobiphenyl 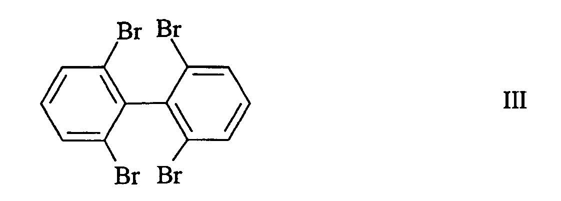 is exchanged with hydrogen by bromine-metal exchange and subsequent metal-hydrogen exchange by reaction with a proton donor, to afford a compound of formula 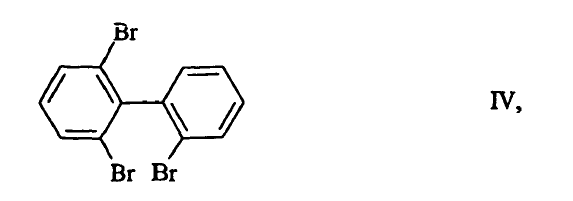 and a second reaction sequence, wherein one bromine atom of the aromatic moiety of the compound of formula IV containing two bromines is exchanged with OR¹ by bromine-metal exchange and subsequent metal-hydroxy exchange, followed by an alkylation, to afford a compound of formula 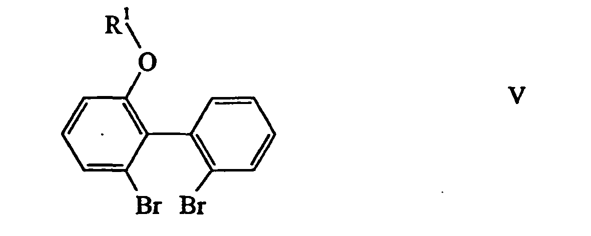 wherein R¹ is as defined above,
and further reaction sequences, wherein each reaction sequence comprises at least one bromine-metal exchange and subsequent metal-phophine exchange with the respective phosphine, thereby exchanging the respective bromine atom with a diarylphosphino, di-C₅₋₁₀-cycloalkylphosphino or di-C₁₋₆-alkylphosphino group.

2. The process of claim 1, wherein the bromine-metal exchange of the compound of formula III is carried out with one equivalent of *n*-butyllithium at a temperature below -40 °C.

3. The process of claims 1 or 2, wherein the proton donor is selected from the group consisting of C₁₋₃-alcohols, water, non-oxidizing inorganic proton acids, and C₁₋₃-alkanoic acids.

4. The process of any of claims 1 to 3, wherein the bromine -metal exchange of the second reaction sequence is carried out with one equivalent of *n*-butyllithium at a temperature below -40 °C, the metal-hydroxy exchange is carried out with a borane or organoborate and subsequent reaction with a peroxy compound in the presence of an alkali and/or earth alkali hydroxide, and the alkylation is carried out with an alkylating agent in the presence of a base.

5. The process of claim 4, wherein the borane or organoborate, is fluoromethoxyborane ethyl ether adduct, triisopropylborate or trimethylborate.

6. The process of claims 4 or 5, wherein the peroxy compound is selected from the group consisting of hydrogen peroxide, peracetic acid, *m*-chloroperbenzoic acid and *tert*-butyl hydroperoxide.

7. The process of any of claims 4 to 6, wherein the alkylating agent is a C₁₋₆-alkyl halide, a C₅₋₁₀-cycloalkyl halide or dimethyl sulfate.

8. The process of any of claims 1 to 7, wherein a further reaction sequence is carried out starting with the compound of formula V, comprising a low temperature bromine-metal exchange of the remaining bromine atoms of the compound of formula V and subsequent metal-phosphine exchange, to afford a compound of formula 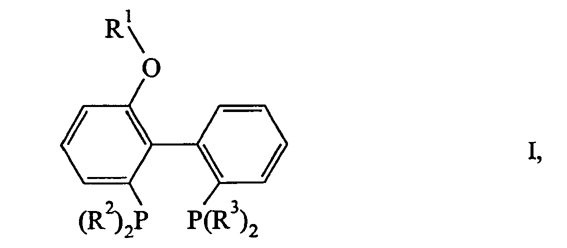 wherein R¹ is C₁₋₆-alkyl or C₃₋₁₀-cycloalkyl optionally substituted with one or more halogen atoms, and
R² and R³ are equal and are C₅₋₁₀-cycloalkyl or C₁₋₆-alkyl,
or
R² is C₅₋₁₀-cycloalkyl or C₁₋₆-alkyl, and R³ is aryl optionally substituted with one or more substituents selected from the group consisting of halogen atoms, nitro, amino, C₁₋₆-alkyl, C₁₋₆-alkoxy and di-C₁₋₆-alkylamino groups,
and each C₁₋₆-alkyl, C₁₋₆-alkoxy, di-C₁₋₆-alkylamino and C₅₋₁₀-cycloalkyl group in R² and R³ optionally being substituted with one or more halogen atoms.

9. The process of any of claims 1 to 7, wherein a further reaction sequence is carried out starting from compounds of formula V, comprising a low temperature bromine-metal exchange of one bromine atom of the aryl moiety containing the OR¹ substituent and metal-phosphine exchange, to afford a compound of formula 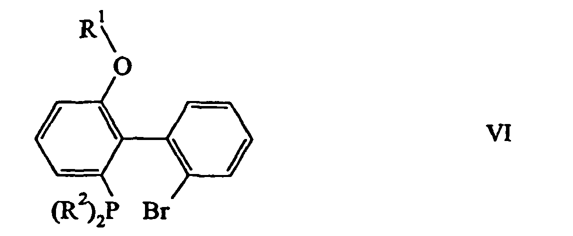 wherein R¹ is as defined above and wherein R² is C₅₋₁₀-cycloalkyl or C₁₋₆-alkyl, the C₅₋₁₀cycloalkyl or C₁₋₆-alkyl groups in R² optionally being substituted with one or more halogen atoms,
followed by a bromine-metal exchanged of the remaining bromine atom and subsequent high temperature metal-phosphine exchange with a diarylphosphino substituent, to afford ligands of formula 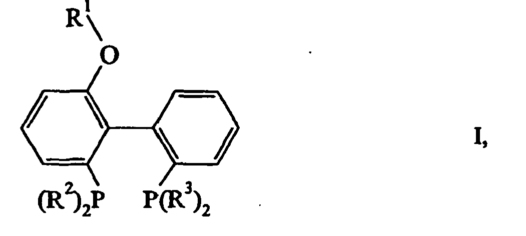 wherein R¹ and R² are as defined above, and R³ is aryl optionally substituted with one or more substituents selected from the group consisting of halogen atoms, nitro, amino, C₁₋₆-alkyl, C₁₋₆-alkoxy and di-C₁₋₆-alkylamino groups, and each C₁₋₆-alkyl, C₁₋₆-alkoxy and di-C₁₋₆-alkylamino in R³ optionally being substituted with one or more halogen atoms.

10. The process of claims 8 or 9, wherein each low temperature bromine-metal exchange is carried out with an organometallic compound at a temperature below -40 °C, preferably in the range of -60 to -90 °C.

11. The process of claims 8 or 9, wherein the high temperature bromine-metal exchange is carried out with *n*-butyllithium or *tert*-butyllithium at a temperature of at least 0 °C, preferably in the range of 0 to +40 °C.

12. The process of any of claims 1 to 11, wherein the metal-phosphine exchange is carried out using a halophosphine of the formula 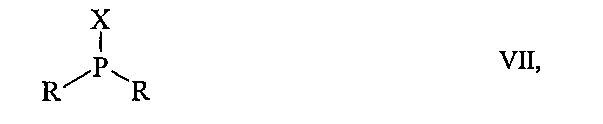 wherein X is chlorine, bromine or iodine and R are equal and are R² or R³, wherein R² and R³ are as definded above.

13. The process of claim 12, wherein halophosphine of the formula VII is selected from the group consisting of halodi-(C₅₋₁₀-cycloalkyl)phosphines and halodiarylphosphines, preferably is selected from the group consisting of chlorodicyclohexylphosphine, bromodicyclohexylphosphine, chlorodiphenylphosphine or bromodiphenylphosphine.

## Patentansprüche

1. Verfahren zur Herstellung von asymmetrisch substituierten Biaryldiphosphinliganden der Formel 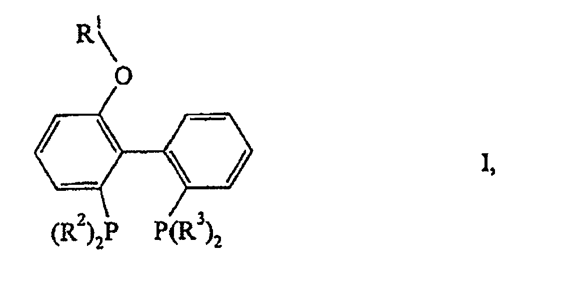 worin R¹ für gegebenenfalls durch ein oder mehrere Halogenatome substituiertes C₁₋₆-Alkyl oder C₃₋₁₀-Cycloalkyl steht und
R² und R³ gleich sind und für C₅₋₁₀-Cycloalkyl oder C₁₋₆-Alkyl stehen
oder
R² für C₁₋₆-Alkyl oder C₅₋₁₀-Cycloalkyl steht und R³ für gegebenenfalls durch einen oder mehrere Substituenten aus der Gruppe bestehend aus Halogenatomen, Nitro-, Amino-, C₁₋₆-Alkyl-, C₁₋₆-Alkoxy- und Di-C₁₋₆-alkylaminogruppen substituiertes Aryl steht, und
wobei jede C₁₋₆-Alkyl-, C₁₋₆-Alkoxy-, Di-C₁₋₆-alkylamino- und C₅₋₁₀-Cycloalkylgruppe in R² und R³ gegebenenfalls durch ein oder mehrere Halogenatome substituiert ist,
mit einer ersten Reaktionssequenz, in der man ein Bromatom von 2,2',6,6'-Tetrabrombiphenyl 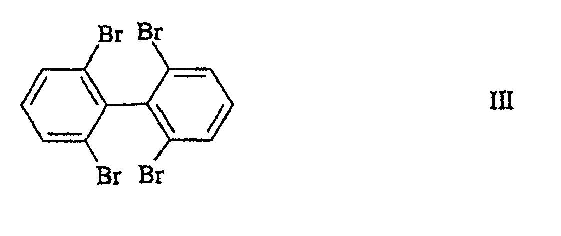 durch Brom-Metall-Austausch und anschließenden Metall-Wasserstoff-Austausch durch Umsetzung mit einem Protonendonator gegen Wasserstoff austauscht, was eine Verbindung der Formel 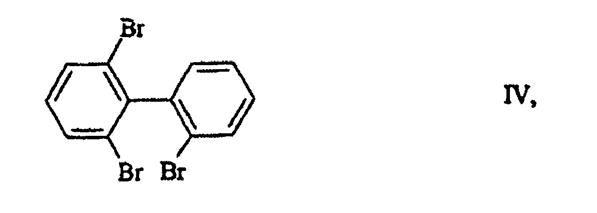 ergibt,
und einer zweiten Reaktionssequenz, in der man ein Bromatom der aromatischen Gruppe der Verbindung der Formel IV mit zwei Bromatomen durch Brom-Metall-Austausch, anschließenden Metall-Hydroxy-Austausch und nachfolgende Alkylierung gegen OR¹ austauscht, was eine Verbindung der Formel 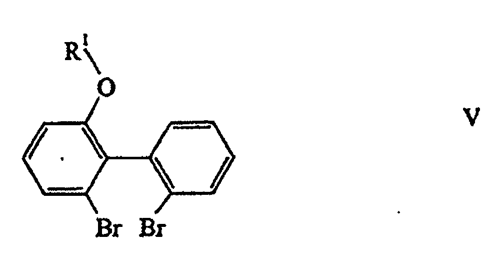 worin R¹ die oben angegebene Bedeutung besitzt, ergibt,
und weiteren Reaktionssequenzen, wobei jede Reaktionssequenz mindestens einen Brom-Metall-Austausch und anschließenden Metall-Phosphin-Austausch mit dem jeweiligen Phosphin umfaßt, wodurch das jeweilige Bromatom gegen eine Diarylphosphino-, Di-C₅₋₁₀-cycloalkylphosphino- oder Di-C₁₋₆-alkylphosphinogruppe ausgetauscht wird.

2. Verfahren nach Anspruch 1, bei dem man den Brom-Metall-Austausch der Verbindung der Formel III mit einem Äquivalent n-Butyllithium bei einer Temperatur unter -40°C durchführt.

3. Verfahren nach Anspruch 1 oder 2, bei dem man den Protonendonator aus der Gruppe bestehend aus C₁₋₃-Alkoholen, Wasser, nichtoxidierenden anorganischen Protonensäuren und C₁₋₃-Alkansäuren auswählt.

4. Verfahren nach einem der Ansprüche 1 bis 3, bei dem man den Brom-Metall-Austausch der zweiten Reaktionssequenz mit einem Äquivalent n-Butyllithium bei einer Temperatur unter -40°C durchführt, den Metall-Hydroxy-Austausch mit einem Boran oder Organoborat und anschließende Umsetzung mit einer Peroxyverbindung in Gegenwart eines Alkali- und/oder Erdalkalihydroxids durchführt und die Alkylierung mit einem Alkylierungsmittel in Gegenwart einer Base durchführt.

5. Verfahren nach Anspruch 4, bei dem es sich bei dem Boran oder Organoborat um Fluormethoxyboran-Ethylether-Addukt, Triisopropylborat oder Trimethylborat handelt.

6. Verfahren nach Anspruch 4 oder 5, bei dem man die Peroxyverbindung aus der Gruppe bestehend aus Wasserstoffperoxid, Peressigsäure, m-Chlorperbenzoesäure und *tert*.-Butylhydroperoxid auswählt.

7. Verfahren nach einem der Ansprüche 4 bis 6, bei dem es sich bei dem Alkylierungsmittel um ein C₁₋₆-Alkylhalogenid, ein C₅₋₁₀-Cycloalkylhalogenid oder Dimethylsulfat handelt.

8. Verfahren nach einem der Ansprüche 1 bis 7, bei dem man ausgehend von der Verbindung der Formel V eine weitere Reaktionssequenz mit einem bei niedriger Temperatur erfolgenden Brom-Metall-Austausch der verbleibenden Bromatome der Verbindung der Formel V und anschließendem Metall-Phosphin-Austausch, was eine Verbindung der Formel 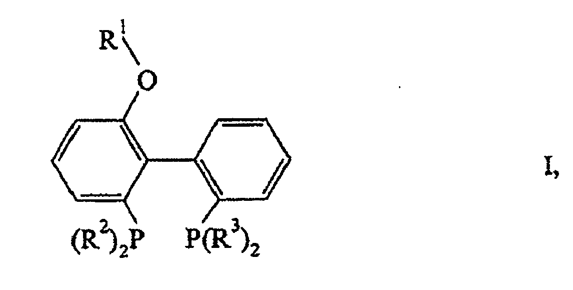 worin R¹ für gegebenenfalls durch ein oder mehrere Halogenatome substituiertes C₁₋₆-Alkyl oder C₃₋₁₀-Cycloalkyl steht und
R² und R³ gleich sind und für C₅₋₁₀-Cycloalkyl oder C₁₋₆-Alkyl stehen
oder
R² für C₅₋₁₀-Cycloalkyl oder C₁₋₆-Alkyl steht und R³ für gegebenenfalls durch einen oder mehrere Substituenten aus der Gruppe bestehend aus Halogenatomen, Nitro-, Amino-, C₁₋₆-Alkyl-, C₁₋₆-Alkoxy- und Di-C₁₋₆-alkylaminogruppen substituiertes Aryl steht,
und wobei jede C₁₋₆-Alkyl-, C₁₋₆-Alkoxy-, Di-C₁₋₆-alkylamino- und C₅₋₁₀-Cycloalkylgruppe in R² und R³ gegebenenfalls durch ein oder mehrere Halogenatome substituiert ist, ergibt, durchführt.

9. Verfahren nach einem der Ansprüche 1 bis 7, bei dem man ausgehend von Verbindungen der Formel V eine weitere Reaktionssequenz mit einem bei niedriger Temperatur erfolgenden Brom-Metall-Austausch eines Bromatoms der Arylgruppe mit dem OR¹-Substituenten und einem Metall-Phosphin-Austausch, was eine Verbindung der Formel 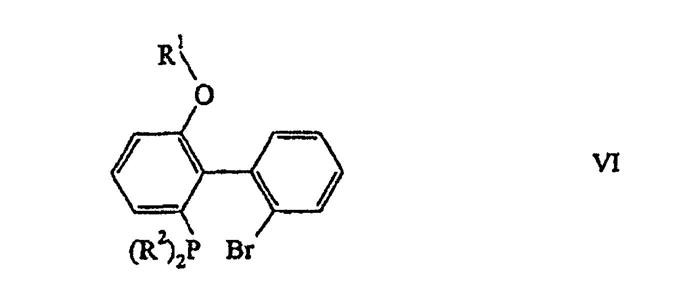 worin R¹ die oben angegebene Bedeutung besitzt und R² für C₅₋₁₀-Cycloalkyl oder C₁₋₆-Alkyl steht, wobei die C₅₋₁₀-Cycloalkyl- oder C₁₋₆-Alkylgruppen in R² gegebenenfalls durch ein oder mehrere Halogenatome substituiert sind, ergibt,
gefolgt von einem Brom-Metall-Austausch des verbleibenden Bromatoms und anschließendem bei hoher Temperatur erfolgendem Metall-Phosphin-Austausch gegen einen Diarylphosphinosubstituenten, was Liganden der Formel 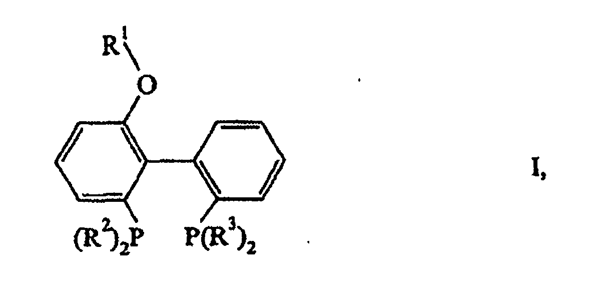 worin R¹ und R² die oben angegebene Bedeutung besitzen und R³ für gegebenenfalls durch einen oder mehrere Substituenten aus der Gruppe bestehend aus Halogenatomen, Nitro-, Amino-, C₁₋₆-Alkyl, C₁₋₆-Alkoxy- und Di-C₁₋₆-alkylaminogruppen substituiertes Aryl steht, und wobei jede C₁₋₆-Alkyl-, C₁₋₆-Alkoxy- und Di-C₁₋₆-alkylaminogruppe in R³ gegebenenfalls durch ein oder mehrere Halogenatome substituiert ist, ergibt, durchführt.

10. Verfahren nach Anspruch 8 oder 9, bei dem man jeden bei niedriger Temperatur erfolgenden Brom-Metall-Austausch mit einer metallorganischen Verbindung bei einer Temperatur unter -40°C und vorzugsweise im Bereich von -60 bis -90°C durchführt.

11. Verfahren nach Anspruch 8 oder 9, bei dem man den bei hoher Temperatur erfolgenden Brom-Metall-Austausch mit *n*-Butyllithium oder *tert*.-Butyllithium bei einer Temperatur von mindestens 0°C und vorzugsweise im Bereich von 0 bis +40°C durchführt.

12. Verfahren nach einem der Ansprüche 1 bis 11, bei dem man den Metall-Phosphin-Austausch mit einem Halogenphosphin der Formel 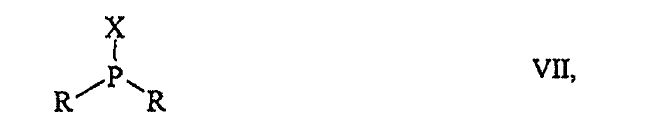 worin X für Chlor, Brom oder Iod steht und die Reste R gleich sind und für R² oder R³ stehen, wobei R² und R³ die oben angegebene Bedeutung besitzen,
durchführt.

13. Verfahren nach Anspruch 12, bei dem man das Halogenphosphin der Formel VII aus der Gruppe bestehend aus Halogendi(C₅₋₁₀-cycloalkyl)phosphinen und Halogendiarylphosphinen und vorzugsweise aus der Gruppe bestehend aus Chlordicyclohexylphosphin, Bromdicyclohexylphosphin, Chlordiphenylphosphin oder Bromdiphenylphosphin auswählt.

## Revendications

1. Procédé de préparation de ligands biaryldiphosphine asymétriquement substitués de formule 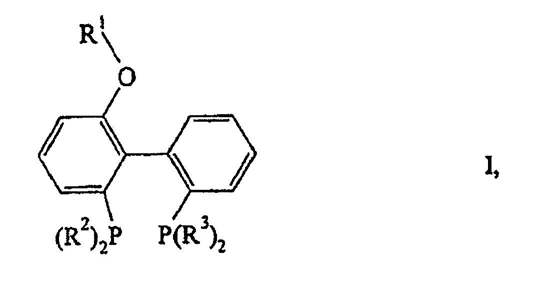 dans laquelle R¹ est un groupe alkyle en C₁₋₆ ou un groupe cycloalkyle en C₃₋₁₀ éventuellement substitué par un ou plusieurs atomes d'halogène, et
R² et R³ sont identiques et sont un groupe cycloalkyle en C₅₋₁₀ ou un groupe alkyle en C₁₋₆,
ou
R² est un groupe alkyle en C₁₋₆ ou un groupe cycloalkyle en C₅₋₁₀, et R³ est un groupe aryle éventuellement substitué par un ou plusieurs substituants choisis parmi le groupe constitué d'atomes d'halogène, d'un groupe nitro, d'un groupe amino, d'un groupe alkyle en C₁₋₆, d'un groupe alcoxy en C₁₋₆ et d'un groupe di-C₁₋₆-alkylamino, et
chaque groupe alkyle en C₁₋₆, groupe alcoxy en C₁₋₆, groupe di-C₁₋₆-alkylamino et groupe cycloalkyle en C₅₋₁₀ dans R² et R³ étant éventuellement substitué par un ou plusieurs atomes d'halogène,
comprenant une première séquence de réaction, dans laquelle un atome de brome du 2,2',6,6'-tétrabromobiphényle 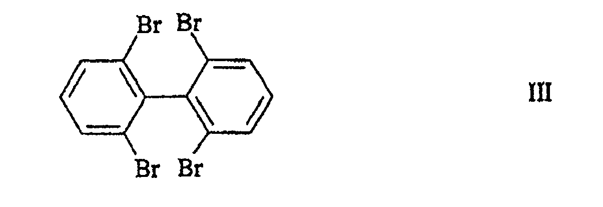 est échangé avec un atome d'hydrogène par échange brome-métal et échange métal-hydrogène subséquent par la réaction avec un donneur de protons, pour donner lieu à un composé de formule 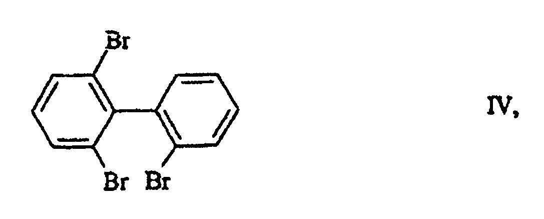 et une deuxième séquence de réaction, dans laquelle un atome de brome du fragment aromatique du composé de formule IV renfermant deux atomes de brome est échangé avec OR¹ par échange brome-métal et échange métal-hydroxy subséquent, suivi d'une alkylation, pour donner lieu à un composé de formule 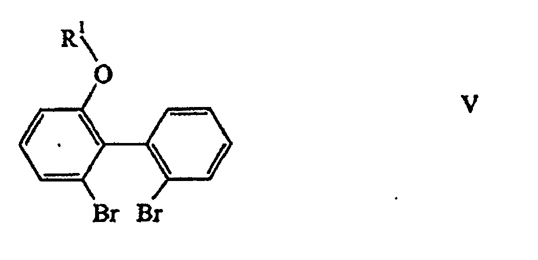 dans laquelle R¹ est tel que défini ci-dessus,
et des séquences de réaction supplémentaires, où chaque séquence de réaction comprend au moins un échange brome-métal et un échange métal-phosphine subséquent avec la phosphine respective, échangeant ainsi l'atome de brome respectif avec un groupe diarylphosphino, un groupe di-C₅₋₁₀-cycloalkylphosphino ou un groupe di-C₁₋₆-alkylphosphino.

2. Procédé selon la revendication 1, dans lequel l'échange brome-métal du composé de formule III est réalisé avec un équivalent de *n*-butyllithium à une température inférieure à -40°C.

3. Procédé selon les revendications 1 ou 2, dans lequel le donneur de protons est choisi parmi le groupe constitué d'alcools en C₁₋₃, de l'eau, d'acides protoniques inorganiques non oxydants et d'acides alcanoïques en C₁₋₃.

4. Procédé selon l'une quelconque des revendications 1 à 3, dans lequel l'échange brome-métal de la deuxième séquence de réaction est réalisé avec un équivalent de n-butyllithium à une température inférieure à -40°C, l'échange métal-hydroxy est réalisé avec un borane ou un organoborate et une réaction subséquente avec un composé peroxy en présence d'un hydroxyde de métal alcalin et/ou de métal alcalino-terreux, et l'alkylation est effectuée avec un agent d'alkylation en présence d'une base.

5. Procédé selon la revendication 4, dans lequel le borane ou l'organoborate est un produit d'addition de fluorométhoxyborane-éther éthylique, le borate de triisopropyle ou le borate de triméthyle.

6. Procédé selon les revendications 4 ou 5, dans lequel le composé peroxy est choisi parmi le groupe constitué du peroxyde d'hydrogène, de l'acide peracétique, de l'acide *m-*chloroperbenzoïque et de l'hydroperoxyde de *tert-*butyle.

7. Procédé selon l'une quelconque des revendications 4 à 6, dans lequel l'agent d'alkylation est un halogénure d'alkyle en C₁₋₆, un halogénure de cycloalkyle en C₅₋₁₀ ou le sulfate de diméthyle.

8. Procédé selon l'une quelconque des revendications 1 à 7, dans lequel une séquence de réaction supplémentaire est réalisée en partant du composé de formule V, comprenant un échange brome-métal à faible température des atomes de brome restants du composé de formule V et un échange métal-phosphine subséquent, pour donner lieu à un composé de formule 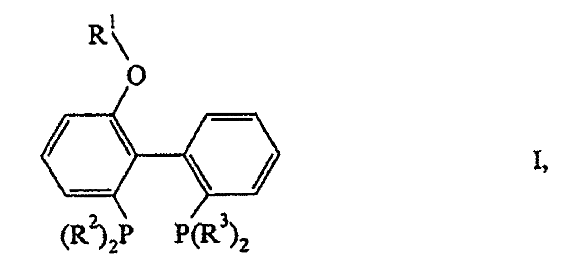 dans laquelle R¹ est un groupe alkyle en C₁₋₆ ou un groupe cycloalkyle en C₃₋₁₀ éventuellement substitué par un ou plusieurs atomes d'halogène, et
R² et R³ sont identiques et sont un groupe cycloalkyle en C₅₋₁₀ ou un groupe alkyle en C₁₋₆,
ou
R² est un groupe alkyle en C₁₋₆ ou un groupe cycloalkyle en C₅₋₁₀, et R³ est un groupe aryle éventuellement substitué par un ou plusieurs substituants choisis parmi le groupe constitué d'atomes d'halogène, d'un groupe nitro, d'un groupe amino, d'un groupe alkyle en C₁₋₆, d'un groupe alcoxy en C₁₋₆ et d'un groupe di-C₁₋₆-alkylamino, et
chaque groupe alkyle en C₁₋₆, groupe alcoxy en C₁₋₆, groupe di-C₁₋₆-alkylamino et groupe cycloalkyle en C₅₋₁₀ dans R² et R³ étant éventuellement substitué par un ou plusieurs atomes d'halogène.

9. Procédé selon l'une quelconque des revendications 1 à 7 dans lequel une séquence de réaction supplémentaire est réalisée en partant de composés de formule V, comprenant un échange brome-métal à faible température d'un atome de brome du fragment aryle renfermant le substituant OR¹ et un échange métal-phosphine, pour donner lieu à un composé de formule 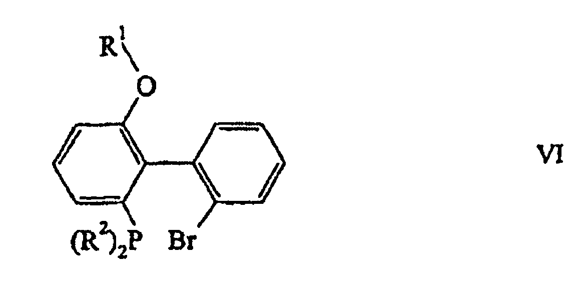 dans laquelle R¹ est tel que défini ci-dessus et dans laquelle R² est un groupe cycloalkyle en C₅₋₁₀
ou un groupe alkyle en C₁₋₆, les groupes cycloalkyle en C₅₋₁₀ ou alkyle en C₁₋₆ dans R² étant éventuellement substitués par un ou plusieurs atomes d'halogène,
suivi d'un échange brome-métal de l'atome de brome restant et d'un échange métal-phosphine subséquent à température élevée avec un substituant diarylphosphino, pour donner lieu à des ligands de formule 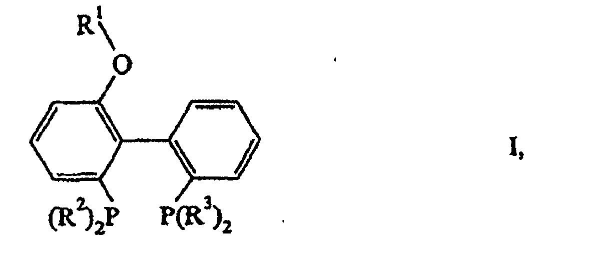 dans laquelle R¹ et R² sont tels que définis ci-dessus, et R³ est un groupe aryle éventuellement substitué par un ou plusieurs substituants choisis parmi le groupe constitué d'atomes d'halogène, d'un groupe nitro, d'un groupe amino, d'un groupe alkyle en C₁₋₆, d'un groupe alcoxy en C₁₋₆ et d'un groupe di-C₁₋₆-alkylamino, et chaque groupe alkyle en C₁₋₆, groupe alcoxy en C₁₋₆ et groupe di-C₁₋₆-alkylamino dans R³ étant éventuellement substitué par un ou plusieurs atomes d'halogène.

10. Procédé selon les revendications 8 ou 9, dans lequel chaque échange brome-métal à faible température est réalisé avec un composé organométallique à une température inférieure à -40°C, de préférence dans la plage de -60 à -90°C.

11. Procédé selon les revendications 8 ou 9, dans lequel l'échange brome-métal à température élevée est réalisé avec du *n*-butyllithium ou du *tert-*butyllithium à une température d'au moins 0°C, de préférence dans la plage de 0 à +40°C.

12. Procédé selon l'une quelconque des revendications 1 à 11, dans lequel l'échange métal-phosphine est réalisé en utilisant une halogénophosphine de formule 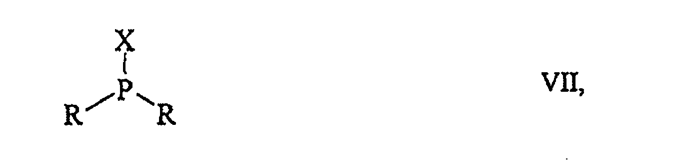 dans laquelle X est un atome de chlore, un atome de brome ou un atome d'iode et les R sont identiques et sont un groupe R² ou un groupe R³ où R² et R³ sont tels que définis ci-dessus.

13. Procédé selon la revendication 12, dans lequel une halogénophosphine de formule VII est choisie parmi le groupe constitué d'halogénodi-(C₅₋₁₀-cycloalkyl)phosphines et d'halogénodiarylphosphines, de préférence est choisie parmi le groupe constitué de la chlorodicyclohexylphosphine, de la bromodicyclohexylphosphine, de la chlorodiphénylphosphine ou de la bromodiphénylphosphine.
